# EUROPEAN PATENT APPLICATION

(11) **EP 4 664 786 A1**
(43) Date of publication of application: **17.12.2025**
(21) Application number: 24785362.5
(22) Date of filing: 08.04.2024
(51) Int. Cl.: H04B 7/08, H04B 7/024, H04W 72/0446, H04W 72/1273, H04W 72/231, H04W 72/232, H04L 1/08, H04L 5/00

(54) **METHOD AND DEVICE FOR BEAM DETERMINATION IN COMMUNICATION SYSTEM**

(30) Priority: 07.04.2023 KR 20230046245
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR)
(74) Representative: Isarpatent
(86) International application number: PCT/KR2024/004604
(87) International publication number: WO 2024/210665

(57) **Abstract**

A method of a UE according to an embodiment of the present disclosure may comprise the steps of: receiving repetitive transmission information of identical data through higher layer signaling; receiving first DCI from a first TRP; when beam indication information included in the first DCI indicates a reception beam change, configuring a first reception beam for receiving PDSCHs for a pre-configured first time; when at least one PDSCH occasion based on the repetitive transmission information exists within the first time, determining whether a default beam use condition is satisfied; and when the default beam use condition is satisfied, receiving PDSCHs from the first TRP by using a default beam on the at least one PDSCH occasion based on the repetitive transmission information.

## Description

### [Technical Field]

The present disclosure relates to an enhanced communication technique, and more particularly, to a technique for beam determination.

### [Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in the 3GPP standardization for 5G communication, multiple transmission and reception points (mTRP) technology using beamforming in high-frequency bands has been proposed. The mTRP technology is an example of a multiple input multiple output (MIMO) scheme and is a method that can improve data transmission efficiency. For example, multiple TRPs may transmit data to a terminal located at a cell edge. Through this, the mTRP scheme can reliably transmit data to the terminal and increase the data transmission rate.

The mTRP scheme is still under standardization, and there are aspects that have not yet been defined as part of the specifications.

### [Disclosure]

### [Technical Problem]

The present disclosure is directed to providing a method and an apparatus for beam determination in a communication system.

### [Technical Solution]

A method of a user equipment (UE) for achieving the above-described objective may comprise: receiving repeated transmission information of same data through higher layer signaling; receiving first downlink control information (DCI) from a first transmission and reception point (TRP); configuring a first reception beam for receiving physical downlink shared channels (PDSCHs) for a preconfigured first time, based on beam indication information included in the first DCI, the beam indication information indicating a change in reception beam; determining whether a default beam usage condition is satisfied, based on at least one PDSCH occasion associated with the repeated transmission information and existing within the first time; and based on a determination that the default beam usage condition is satisfied, receiving PDSCHs from the first TRP using a default beam in the at least one PDSCH occasion associated with the repeated transmission information.

The beam indication information may include a transmission configuration indication (TCI) field and a TCI selection field, the TCI field may indicate one TCI state list among configured TCI state lists, and the TCI selection field may include information indicating one of TCI states in the one TCI state list.

The default beam usage condition may be satisfied when, among PDSCH occasions carrying same data based on the repeated transmission information, a number of PDSCH occasions received after the first time is less than or equal to a number of PDSCH occasions received within the first time.

The default beam usage condition may be satisfied when the first time is equal to or greater than a time interval between PDSCH occasions.

The method may further comprise: receiving a PDSCH using the configured first reception beam in a PDSCH occasion based on the repeated transmission information after the first time, provided that the default beam usage condition is not satisfied.

The method may further comprise: receiving second DCI from the first TRP, the second DCI including beam indication information, uplink resource allocation information, and control information for repeatedly transmitted PDSCHs; receiving a first PDSCH in a first PDSCH occasion based on the repeated transmission information and the second DCI; transmitting feedback information to the first TRP through a physical uplink control channel (PUCCH) according to the uplink resource allocation information, the feedback information including a response to the PDSCHs based on the first DCI; configuring a second reception beam during a beam application time previously received from the first TRP, the second reception beam being configured for receiving the PDSCHs indicated by the second DCI and based on the beam indication information included in the second DCI, the beam indication information indicating a change in reception beam; and receiving a second PDSCH in a second PDSCH occasion using a same reception beam as the first PDSCH, the second PDSCH occasion carrying the same data and existing within the beam application time, based on the repeated transmission information and the second DCI.

The method may further comprise: receiving a second DCI from the first TRP, the second DCI including beam indication information, uplink resource allocation information, and control information for repeatedly transmitted PDSCHs; receiving a first PDSCH in a first PDSCH occasion configured for repeated transmission; transmitting feedback information to the first TRP through a PUCCH according to the uplink resource allocation information, the feedback information including a response to the PDSCHs; configuring a second reception beam during a beam application time previously received from the first TRP, the second reception beam being configured for receiving the PDSCHs indicated by the second DCI and based on the beam indication information included in the second DCI, the beam indication information indicating a change in reception beam; and receiving a second PDSCH in a second PDSCH occasion using the second reception beam, the second PDSCH occasion carrying the same data and existing after configuration of the second reception beam, based on the repeated transmission information and the second DCI.

A user equipment (UE) according to the present disclosure may comprise at least one processor, wherein the at least one processor may cause the UE to perform:

receiving repeated transmission information of same data through higher layer signaling; receiving first downlink control information (DCI) from a first transmission and reception point (TRP); configuring a first reception beam for receiving physical downlink shared channels (PDSCHs) for a preconfigured first time, based on beam indication information included in the first DCI, the beam indication information indicating a change in reception beam; determining whether a default beam usage condition is satisfied, based on at least one PDSCH occasion associated with the repeated transmission information and existing within the first time; and based on a determination that the default beam usage condition is satisfied, receiving PDSCHs from the first TRP using a default beam in the at least one PDSCH occasion associated with the repeated transmission information.

The beam indication information may include a transmission configuration indication (TCI) field and a TCI selection field, the TCI field may indicate one TCI state list among configured TCI state lists, and the TCI selection field may include information indicating one of TCI states in the one TCI state list.

The default beam usage condition may be satisfied when, among PDSCH occasions carrying same data based on the repeated transmission information, a number of PDSCH occasions received after the first time is less than or equal to a number of PDSCH occasions received within the first time.

The default beam usage condition may be satisfied when the first time is equal to or greater than a time interval between PDSCH occasions.

The at least one processor may further cause the UE to perform:

receiving a PDSCH using the configured first reception beam in a PDSCH occasion based on the repeated transmission information after the first time, when the default beam usage condition is not satisfied.

The at least one processor may further cause the UE to perform:

receiving second DCI from the first TRP, the second DCI including beam indication information, uplink resource allocation information, and control information for repeatedly transmitted PDSCHs; receiving a first PDSCH in a first PDSCH occasion based on the repeated transmission information and the second DCI; transmitting feedback information to the first TRP through a physical uplink control channel (PUCCH) according to the uplink resource allocation information, the feedback information including a response to the PDSCHs based on the first DCI; configuring a second reception beam during a beam application time previously received from the first TRP, the second reception beam being configured for receiving the PDSCHs indicated by the second DCI and based on the beam indication information included in the second DCI, the beam indication information indicating a change in reception beam; and receiving a second PDSCH in a second PDSCH occasion using a same reception beam as the first PDSCH, the second PDSCH occasion carrying the same data and existing within the beam application time, based on the repeated transmission information and the second DCI.

The at least one processor may further cause the UE to perform:
receiving a second DCI from the first TRP, the second DCI including beam indication information, uplink resource allocation information, and control information for repeatedly transmitted PDSCHs; receiving a first PDSCH in a first PDSCH occasion configured for repeated transmission; transmitting feedback information to the first TRP through a PUCCH according to the uplink resource allocation information, the feedback information including a response to the PDSCHs; configuring a second reception beam during a beam application time previously received from the first TRP, the second reception beam being configured for receiving the PDSCHs indicated by the second DCI and based on the beam indication information included in the second DCI, the beam indication information indicating a change in reception beam; and receiving a second PDSCH in a second PDSCH occasion using the second reception beam, the second PDSCH occasion carrying the same data and existing after configuration of the second reception beam, based on the repeated transmission information and the second DCI.

A method of a base station according to exemplary embodiments of the present disclosure may comprise: transmitting repeated transmission information of same data to a user equipment (UE) through higher layer signaling; transmitting first downlink control information (DCI) to the UE via a first transmission and reception point (TRP) connected to the base station through a backhaul, the first DCI including beam indication information indicating a change in a reception beam of the UE; and transmitting data to the UE through a physical downlink shared channel (PDSCH) occasion based on the repeated transmission information and the first DCI.

At least one PDSCH occasion is based on the repeated transmission information and exists within a first time for changing the reception beam of the UE, a PDSCH transmitted in the at least one PDSCH occasion being expected to be received by the UE using a default beam preconfigured in advance, provided that a default beam usage condition is satisfied.

The beam indication information may include a transmission configuration indication (TCI) field and a TCI selection field, the TCI field may indicate one TCI state list among configured TCI state lists, and the TCI selection field may include information indicating one of TCI states in the one TCI state list.

The default beam usage condition may be satisfied when, among PDSCH occasions carrying same data based on the repeated transmission information, a number of PDSCH occasions received after the first time is less than or equal to a number of PDSCH occasions received within the first time.

The default beam usage condition may be satisfied when the first time is equal to or greater than a time interval between PDSCH occasions.

The method may further comprise: receiving a default beam information report message based on capability information of the UE from the UE before transmitting the repeated transmission information to the UE; and transmitting default beam configuration information to the UE based on the default beam information report message.

The default beam information report message may be received either at a preconfigured period or when a change greater than a preconfigured threshold is detected in the UE.

### [Advantageous Effects]

According to the present disclosure, methods are provided for a UE to receive a PDSCH in an mTRP environment or a single TRP environment. In the mTRP environment or single TRP environment, a base station can schedule a PDSCH transmitted to the UE based on a capability of the UE. Furthermore, when the same data is transmitted through PDSCHs at different times and a reception beam is changed during PDSCH reception, the UE can receive the PDSCHs using an appropriate beam by using the method according to the present disclosure. Therefore, the UE according to the present disclosure can eliminate ambiguity in reception beam selection even when the reception beam is changed during reception of PDSCHs carrying the same data.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a timefrequency resource in a communication system.
FIG. 9 is a conceptual diagram illustrating a case in which TCI updates for different TRPs occur in an S-DCI-based mTRP environment.
FIG. 10 is a sequence chart illustrating a default beam configuration and update procedure between a UE and a base station.
FIG. 11 is a conceptual diagram illustrating a case in which a repeatedly configured PDSCH occasion partially overlaps a reception beam update time.
FIG. 12 is a flowchart for reception beam determination when PDSCHs are consecutively received within a reception beam update time and after the reception beam update time.
FIG. 13 is a conceptual diagram illustrating a case where, when a PDSCH is configured for repeated transmission, the PDSCH is received inside/outside a BAT duration.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

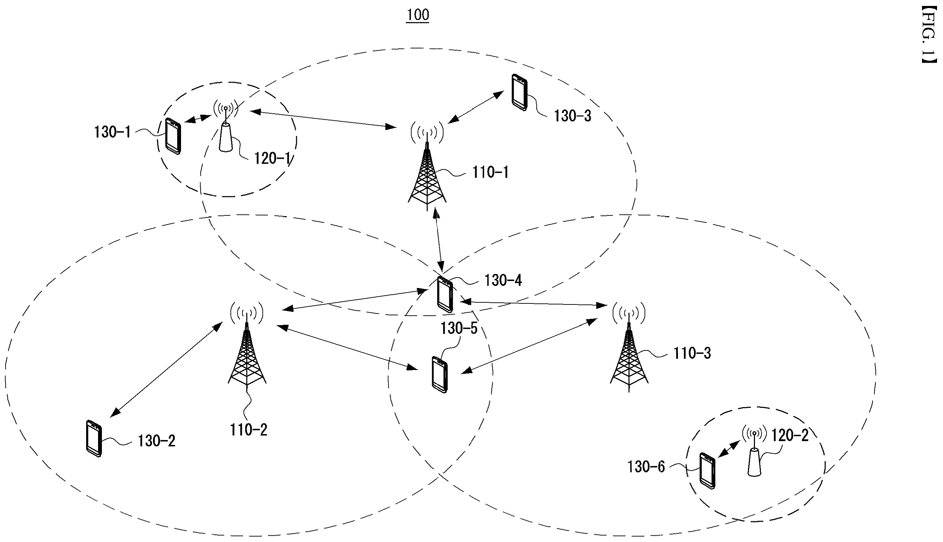

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

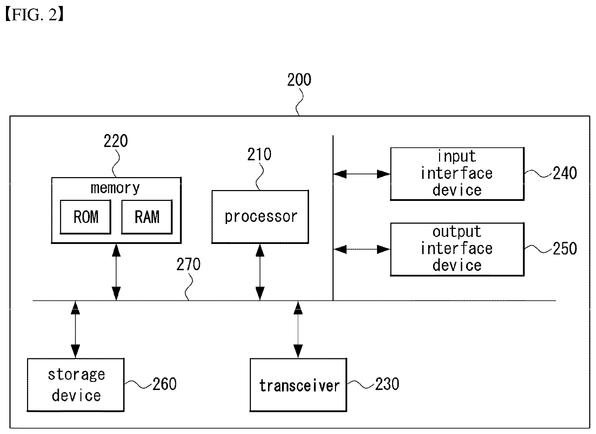

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of readonly memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliabilitybase station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

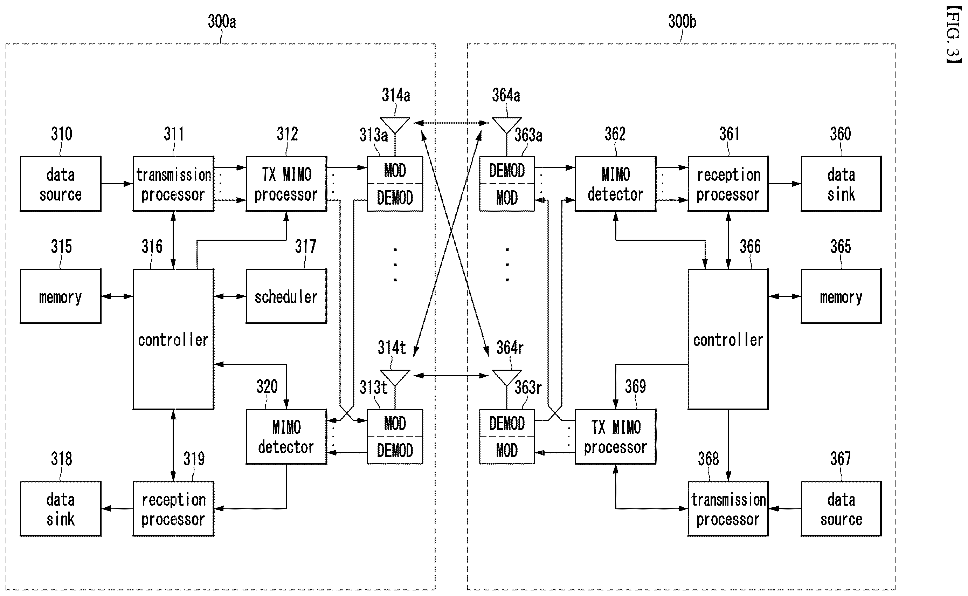

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

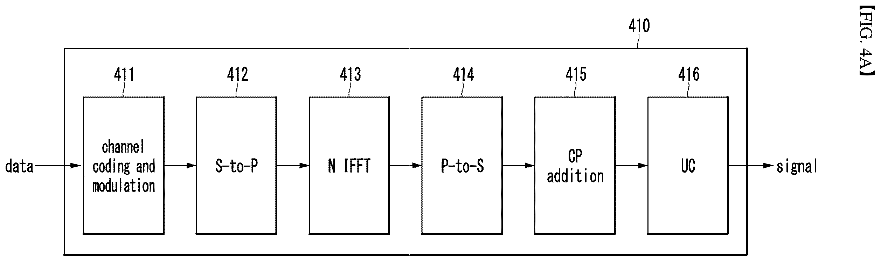

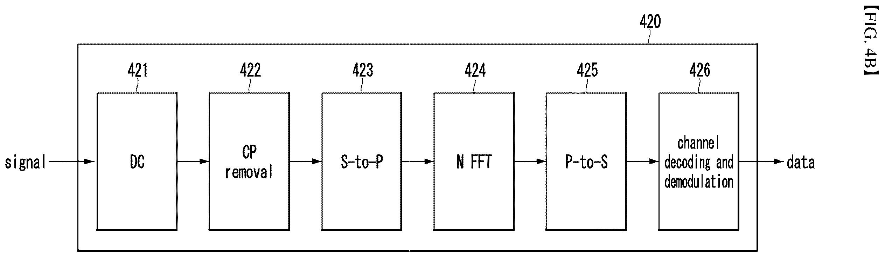

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may upconvert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

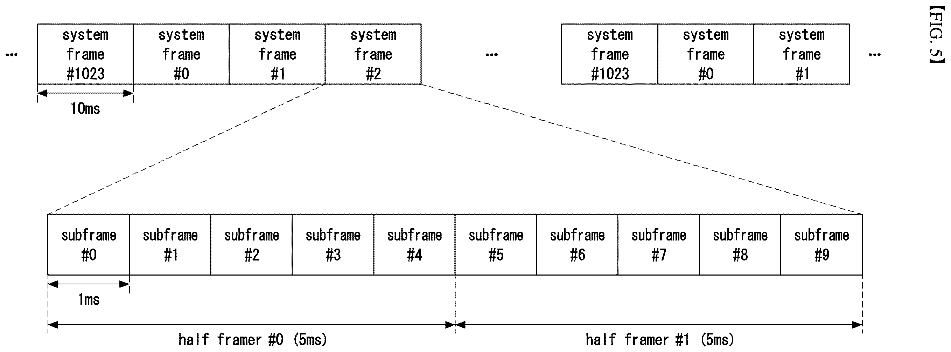

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

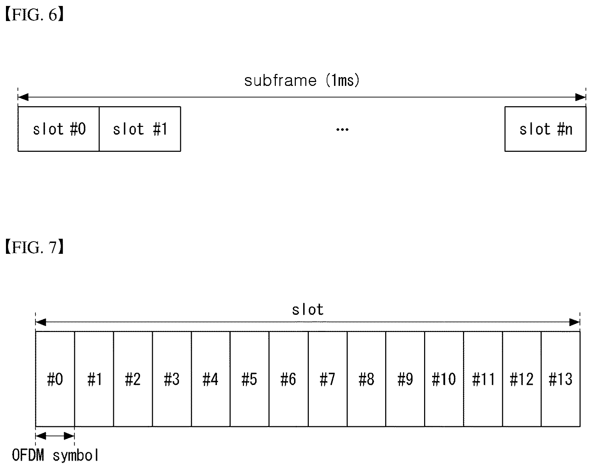

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. µ = 0), the length of slot may be 1 ms. In this case, one system frame may include 10 slots. When a subcarrier spacing is 30 kHz (e.g. µ = 1), the length of slot may be 0.5 ms. In this case, one system frame may include 20 slots.

When a subcarrier spacing is 60 kHz (e.g. µ = 2), the length of slot may be 0.25 ms. In this case, one system frame may include 40 slots. When a subcarrier spacing is 120 kHz (e.g. µ = 3), the length of slot may be 0.125 ms. In this case, one system frame may include 80 slots. When a subcarrier spacing is 240 kHz (e.g. µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

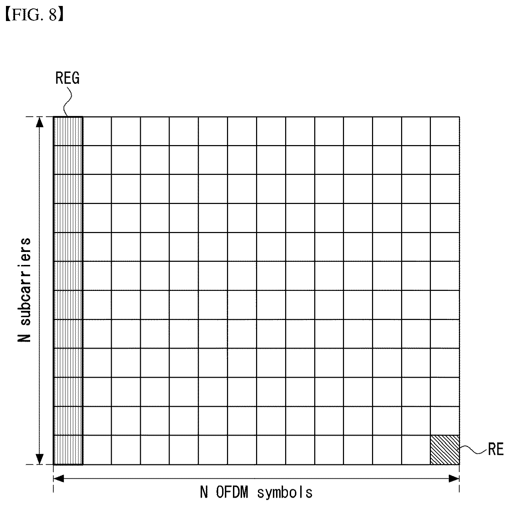

FIG. 8 is a conceptual diagram illustrating a first exemplary embodiment of a timefrequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, in the 5G New Radio (NR) standardization, based on the requirements for massive connectivity, high efficiency, high reliability, and ultra-low latency, various use cases such as eMBB and URLLC have been discussed and determined. As a method to satisfy such use cases, multiple Transmission and Reception Point (mTRP) technology has been proposed, and mTRP technology is one of the methods to address these requirements and falls under a category of MIMO technology.

The mTRP technology is a technology in which a plurality of TRPs transmit data to a single terminal. The mTRP technology may be a technology in which a plurality of TRPs transmit data to a user equipment (UE) when an obstacle exists between a base station and the UE, when a channel environment between the base station and the UE is poor, or when the terminal is located at a cell edge. By applying the mTRP technology, the network can provide reliable and high data rates to the terminal.

The basic structures and related applications of mTRP have been discussed and defined in 3GPP Release 15. Subsequently, in 3GPP Releases 16 and 17, enhanced techniques for mTRP have been discussed and defined. Although the basic concept of mTRP existed in the 3GPP LTE, due to assumptions such as an ideal backhaul and newly defined use cases targeted in 5G, it was not suitable for LTE deployment scenarios. Therefore, it is considered that the practical discussion and definition of mTRP technology started in NR.

The schemes for supporting mTRP may be largely classified into two schemes: coherent joint transmission (CJT) and non-coherent joint transmission (NCJT).

In the CJT scheme, a base station may need to know channel information between each of TRPs and a UE and may need to perform preprocessing on data to be transmitted to the UE based on the channel information. In the CJT scheme, the UE may need to provide the base station with the channel information in order for the base station to know a channel between each TRP and the UE, and the transmission of the channel information may be an overhead. The CJT scheme also has a constraint in that synchronization between the TRPs is required.

In the NCJT scheme, a base station may not need to know channel information between a UE and each of TRPs, and may transmit data to the UE from a plurality of TRPs without preprocessing such as phase compensation.

Due to the advantage of the NCJT scheme over the CJT scheme, the 3GPP standardization has greater interest in the NCJT scheme, which has lower complexity, and the NCJT scheme has been introduced starting from 3GPP Release 16. Transmission based on the NCJT scheme may be classified into a scheme using single downlink control information (DCI) (i.e. single-DCI-based transmission) and a scheme using multiple DCIs (i.e., multi-DCI-based transmission).

The single-DCI-based transmission scheme is a scheme of scheduling PDSCHs delivered from a plurality of TRPs through a single DCI, while the scheme using multiple DCIs is a scheme in which PDSCHs transmitted from the TRPs are scheduled by the TRPs through respective DCIs. In other words, the scheme using multiple DCIs may be a scheme of scheduling a plurality of PDSCHs using a plurality of DCIs.

In single-DCI-based transmission, when the UE receives PDSCH transmissions from two or more TRPs, the UE may expect that at least one resource such as time, frequency, or layer is configured differently for each TRP. For example, in the single-DCI-based transmission scheme, when the UE receives PDSCHs from two or more TRPs, the UE may expect all TRPs to use the same time and frequency resources and to receive the PDSCHs through different layer resources per TRP. As another example, the UE may expect all TRPs to use the same time and layer resources and to receive the PDSCHs through different frequency resources per TRP. As another example, the UE may expect all TRPs to use the same frequency and layer resources and to receive the PDSCHs through different time resources per TRP.

In the multi-DCI-based transmission scheme, PDSCH scheduling for each TRP is performed through an individual DCI, and in this case, the PDSCHs scheduled through a plurality of DCIs may be fully overlapped, partially overlapped, or non-overlapped.

In both the single DCI-based transmission and the multiple DCI-based transmission, the DCI may include transmission configuration indicator (TCI) state information for PDSCH(s).

The TCI state information may be one of the core elements of the mTRP scheme. The reason a TCI state is important is that in a 5G system using a high-frequency band such as FR2, antenna arrays can be installed, and in beam configurations requiring high accuracy and low latency, the base station may need to use TCI state information. Indicating or configuring a TCI state from the base station to the UE may be interpreted as configuring a transmission beam and/or a reception beam. In other words, configuring a TCI state from the base station to the UE may mean indicating and/or configuring a quasi-co-location (QCL) from the downlink (DL) perspective, and may mean configuring a spatial filter from the uplink (UL) perspective.

In the case of a 'unified' TCI state, a common beam may be configured as follows. For example, a unified TCI state may indicate and/or configure a common beam for both DL and UL (or regardless of DL and UL). As another example, a unified TCI state may configure a common beam for each of DL and UL.

In 3GPP Release 17, enhancements have been made for a purpose of increasing the reliability and robustness of mTRP, and one of such enhancements is PDCCH enhancement. A deployment scenario for the PDCCH enhancement may be largely classified into singlefrequency network (SFN) and non-SFN.

In the SFN deployment, different TRPs or different panels may transmit the same PDCCH using the same time and frequency resources. In other words, DMRSs included in the PDCCHs transmitted from all TRPs may have the same configuration, same position, and same sequence. In this case, from the reception perspective for the TRPs or the panels, TCI states may be implicitly configured differently. However, the 3GPP specifications do not support an explicit indication or configuration method for the TCI states. In the case of SFN deployment, synchronization constraints such as the use of an ideal backhaul or a near-ideal backhaul between the TRPs may apply.

In the case of non-SFN, when a plurality of TRPs transmit a PDCCH to one UE, the respective TRPs may use one of two schemes. First, each of the TRPs may use a scheme of multiplexing the entire PDCCH generated by the base station in the time and/or frequency domain and transmitting the PDCCH (e.g. mTRP-based PDCCH repetition). Second, each of the TRPs may use a scheme of dividing encoded bits included in the single PDCCH generated by the base station into the same number of bits for each TRP and transmitting the divided bits through each PDCCH candidate (e.g. sTRP-based PDCCH transmission).

In the first scheme, as many PDCCHs as the number of TRPs are repeatedly generated, and the PDCCHs are transmitted from the same search space index within different search space sets each having the same number of PDCCH candidates. In this case, the search space sets may exist within the same CORESET or may exist within different CORESETs. According to the 3GPP specifications, only one TCI state may be associated with one CORESET. When the PDCCHs are transmitted from different search spaces within the same CORESET, only one TCI state may be indicated and/or configured for the two PDCCHs. In other words, the UE may receive only one TCI state for one TRP at one time. When the respective TRPs transmit PDCCHs at the same search space index within different CORESETs, depending on the number of TCI state(s) indicated and/or configured by a higher layer, the UE may implicitly expect PDCCH reception from a single TRP or may implicitly expect PDCCH reception from multiple TRPs.

In the second scheme, the encoded bits of a single PDCCH generated by the base station are divided into an equal number of parts corresponding to the number of TRPs, and each TRP transmits its part in a different PDCCH candidate. The PDCCHs transmitted from different TRPs may be interpreted with respect to an aggregation level, and the UE may combine the PDCCH parts received from the respective TRPs to obtain the intended information. In the second scheme as well, PDCCH candidates may be allocated to different CORESETs in the same manner as in the first scheme described above. The UE may combine the PDCCHs that have been divided and transmitted. Since the combined payload is the same as that of a PDCCH transmitted by a single TRP, this approach provides a reduction in decoding complexity compared to the repeated transmission method of the first scheme.

The NR specifications may use DCI format 1_0, DCI format 1_1, and DCI format 1_2 for PDSCH scheduling. Each of the DCI formats may be distinguished depending on a usage purpose of DCI. DCI format 1_0 may be also referred to as fallback DCI and may support a small bit size and limited functions. For example, DCI format 1_0 may be used when information exchange between the UE and the base station is incomplete, such as during initial attachment or RRC reconfiguration. When accurate beam configuration between the UE and the base station is impossible or when the accurate beam configuration is not required, DCI format 1_0 may not provide a separate DCI field for unified TCI state configuration.

DCI format 1_1 and DCI format 1_2 may be referred to as non-fallback DCI in contrast to fallback DCI, and DCI format 1_1 and DCI format 1_2 may include not only PDSCH resource configuration information but also information related to reception beam configuration of the UE such as TCI state configuration. In 3GPP Rel-18, discussions are in progress regarding the extension of the unified TCI framework for mTRP targeting DCI format 1_1 and DCI format 1_2 involved in PDSCH scheduling. According to the 3GPP discussions, in addition to three bits used to indicate a TCI state within a DCI field, which is used to indicate a codepoint mapped from TCI state list(s) indicated and/or configured through a MAC-CE, additional two bits may be allocated within a DCI field in relation to beam configuration for PDSCH reception.

According to the 3GPP Rel-18 specifications, the additional two bits may be configured as follows.

In the extension of the unified TCI framework for S-DCI-based mTRP, a two-bit TCI selection field may be configured by RRC to exist in DCI format 1_1 and DCI format 1_2, which schedule and/or activate PDSCH reception (including dynamic PDSCH and SPS PDSCH).
- When the TCI selection field of DCI format 1_1 or DCI format 1_2 indicates '00', the first indicated joint/DL TCI state may be applied to a scheduled PDSCH.
- When the TCI selection field of DCI format 1_1 or DCI format 1_2 indicates '01', the second indicated joint/DL TCI state may be applied to a scheduled PDSCH.
- When the TCI selection field of DCI format 1_1 or DCI format 1_2 indicates '10', all indicated joint/DL TCI states may be applied to a scheduled PDSCH.
- When the TCI selection field of DCI format 1_1 or DCI format 1_2 indicates '11', 'reserved' may be indicated.

When the UE operates in an FR1 band or when the UE supports a function of two default beams for S-DCI-based mTRP in an FR2 band regardless of a threshold, the above descriptions may be applied to PDSCH reception(s) scheduled/activated by DCI format 1_1 and DCI format 1_2.

In the present disclosure described below, 'beam indication information' may include the TCI field and the TCI selection field existing within the DCI. In the following description, the TCI field may also be referred to as a 'beam indication field'.

In general, for a PDSCH configured by a DCI, the UE may configure a PDSCH reception beam by using beam indication information indicated by the DCI after a predetermined time duration or after a predetermined threshold time (e.g. *timeDurationForQCL).* For example, the threshold time configured by *timeDurationForQCL* may refer to a time required to configure a beam for receiving a PDSCH from a reception time of a PDCCH. In the following description, *timeDurationForQCL* is described as a threshold time (or threshold time duration) or as a reception beam update time (or reception beam update time duration).

For a PDSCH not satisfying the predetermined time duration or the threshold time, the UE may receive the PDSCH through the same beam as the PDCCH reception beam. As another example, when the predetermined time duration or the threshold time is satisfied but there is no separate TCI state, the UE may attempt to receive the PDSCH by configuring the reception beam of the PDSCH to be the same as the PDCCH reception beam. In other words, when the time for reception beam configuration is not guaranteed or when there is no configuration indication, the UE may receive the PDSCH by using a default beam, which is the PDCCH reception beam. In the present disclosure, the default beam may mean, for example, the PDCCH reception beam.

The default beam may be required for operations between the UE and the base station even in the mTRP environment. In the mTRP environment, one default beam or multiple default beams may be configured. The one default beam or multiple default beams may be affected by a TCI state indication indicated (or configured) by the DCI and the predetermined time duration or the threshold time (e.g. *timeDurationForQCL)* described above. For smooth communication, a definition is required regarding a relation between an application time of the TCI selection field and a time required for beam sweeping (e.g. *timeDurationForQCL)* described above.

In the present disclosure described below, a time condition between the PDCCH and the PDSCH for application of the TCI state indicated (or configured) through the PDCCH is assumed to be *timeDurationForQCL.*

The UE may deliver its capability information (e.g. UE capability information) to the base station based on a UE capability enquiry message received from the base station. The UE capability information may include *timeDurationForQCL* required for the time duration required for applying the TCI selection field and/or for the time duration required for beam sweeping. In other words, the UE may deliver the UE capability information including *timeDurationForQCL* to the base station.

In 3GPP Rel-17, in relation to application of an unified TCI state in the sTRP environment, a beam application time has been introduced as an application time of a beam indication field indicated (or configured) through a DCI. An application time of TCI state(s) associated with a codepoint indicated by the beam indication field may be after the beam application time (BAT) from a response (e.g. ACK on PUCCH or PUSCH) regarding the PDCCH including the beam indication field.

In the 3GPP specifications, the beam application time, which is the application time of the beam indication field, is defined as follows

The beam application time (beamAppTime) indicates the first slot for applying the unified TCI indicated by a DCI. n1 refers to one symbol, and n2 refers two symbols, and the like. The first slot is after a minimum of Y symbols indicated by a beamAppTime parameter after the last symbol of confirmation for a joint or separate DL/UL beam indication. The same value needs to be configured for all serving cells of one of *simultaneousU-TCI-UpdateListN* configured in a CellGroupConfig IE based on the minimum SCS of the active BWP.

The BAT may be set to a specific value by the base station based on the UE capability information reported by the UE, and may be transmitted to the UE through RRC signaling.

The BAT may be configured for beam alignment between the base station and the UE. In other words, the BAT may be configured by considering a processing delay time related to decoding success of a PDCCH of the UE, a time required for a response at the base station, and an application time of a beam. The BAT also needs to be considered together according to the unified TCI state framework extension for mTRP.

The UE may receive configuration information regarding repeated PDSCH transmission from the base station through RRC signaling (or message). For example, the base station may transmit an RRC signaling to the UE using *'tdmSchemeA',* which indicates repetition in the time domain, to configure two PDSCH occasions. The RRC signaling configuring two PDSCH occasions needs to define an operation method for configuring a reception beam between the repeated PDSCH occasions and time constraints such as the BAT and *timeDurationForQCL.*

The present disclosure described below describes operations requiring additional definitions as described above.

Regarding an application time of the TCI state, the UE may receive BAT information from the base station through RRC signaling. The UE may also deliver to the base station information on a time required for beam sweeping supported by the UE (e.g. *timeDurationForQCL).* The 3GPP specifications define *timeDurationForQCL* and define reception beam configuration of the UE based on a time of a scheduled PDSCH. *timeDurationForQCL* may be set in units of symbols. For example, when a subcarrier spacing (SCS) is 60 kHz, *timeDurationForQCL* may be configured from a minimum of 7 symbols to a maximum of 28 symbols. The BAT may also be configured in units of symbols. For example, the BAT may be configured from a minimum of 1 symbol to a maximum of 336 symbols. A start time of *timeDurationForQCL* is based on the PDCCH, and therefore it is earlier than the BAT, which has as its start time a response (e.g. ACK for a PUCCH or PUSCH) to a PDSCH scheduled by the PDCCH. Since a resource configuration of a PUCCH is configured by the PDCCH, the base station may configure the BAT so that there is no overlap between *timeDurationForQCL* and a duration according to the BAT.

*timeDurationForQCL* and BAT according to exemplary embodiments of the present disclosure may be differently applied due to time constraints considering beam change and beam alignment at the UE and the base station. In other words, when configuring a reception beam, the UE may apply different timing for the reception beam configuration depending on a PDSCH occasion time and on a start and/or end time of *timeDurationForQCL* and/or BAT in the time domain, based on the configuration of the base station.

Hereinafter, beam configuration operations of the base station and the UE for each situation, and problems and solutions thereof according to exemplary embodiments of the present disclosure are described.

### (1) First exemplary embodiment: case of considering a single PDSCH transmission

The values of *timeDurationForQCL* and BAT are UE-specific values. However, there may be a case where a PDSCH needs to be transmitted as cell-common by the base station. When a PDSCH is transmitted as cell-common, the base station may not be able to fully apply and use the TCI states on a per-UE basis. In other words, a PDSCH that does not take into account *timeDurationForQCL* or BAT may be transmitted to the UE.

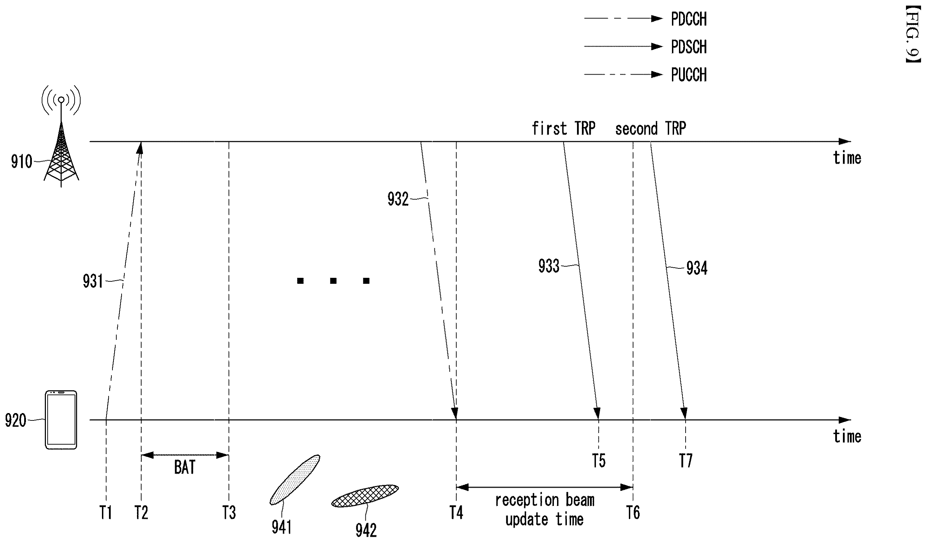

FIG. 9 is a conceptual diagram illustrating a case in which TCI updates for different TRPs occur in an S-DCI-based mTRP environment.

FIG. 9 illustrates a base station 910 and a UE 920. The base station 910 may include all or part of the components of the communication node 200 described in FIG. 2. The base station 910 may further include additional components in addition to the components of the communication node 200 illustrated in FIG. 2. For example, the base station 910 may further include an interface for configuring backhaul links of TRPs not illustrated in FIG. 2. The base station 910 may further include an interface for communicating with an upper core network (not illustrated in the drawing).

The UE 920 may include all or part of the components of the communication node 200 described in FIG. 2. The UE 920 may further include additional devices for user convenience in addition to the components of the communication node 200 illustrated in FIG. 2. For example, the UE 920 may further include various sensor devices for detecting user movement.

In the example of FIG. 9, the horizontal axis may represent time. The system illustrated in FIG. 9 assumes a single-DCI (S-DCI)-based multi-TRP (mTRP) environments. Two or more TRPs (not illustrated in FIG. 9) under the base station 910 may be connected via backhaul. The UE 920 may receive PDCCHs and PDSCHs via the TRPs connected to the base station 910, and when a PDSCH is received, the UE 920 may transmit a PUCCH 931 in uplink (UL). The UE 920 may transmit the PUCCH 931 including a Hybrid Automatic Repeat and request (HARQ) response (ACK) for reception of the PDSCH at a time T1 to the base station 910 via the TRPs.

When the base station 910 receives the PUCCH 931 from the UE 920 at a time T2, the base station 910 may perform beam change and beam alignment during a time from T2 to T3 configured by a BAT for downlink beam configuration. Based on the beam alignment of the base station 910, the UE 920 may configure beams to be used with the TRPs connected to the base station 910 based on TCI states. In the example of FIG. 9, it is assumed that the UE 920 communicates via a first TRP (TRP #1) (not illustrated in FIG. 9) and a second TRP (TRP #2) (not illustrated in FIG. 9) connected to the base station 910. The UE 920 assumes that the first TRP (TRP #1) connected to the base station 910 is configured with a first beam 941 based on TCI #3 and that the second TRP (TRP #2) is configured with a second beam 942 based on TCI #7. The UE 920 may communicate with the first TRP (TRP #1) using the beam 941 configured based on TCI #3 and may communicate with the second TRP (TRP #2) using the beam 942 configured based on TCI #7, from a time T3 to a time T4.

The base station 910 may transmit TCI update information to the UE 920 through a PDCCH 932. Here, the TCI update information may indicate that the TCI states configured with the TRPs (e.g. the first TRP and the second TRP) are changed. The UE 920 may receive the TCI update information from the base station 910 through the PDCCH 932 at the time T4. The TCI update information may include joint type information. It is assumed that the TCI update information included in the PDCCH indicates TCI #0 as the TCI state for the first TRP (TRP #1) and indicates TCI #3 as the TCI state for the second TRP (TRP #2).

According to the above assumption, based on the TCI update information, the UE 920 may be indicated to update the reception beam with the first TRP (TRP #1) from TCI #3 to TCI #0 and the UE 920 is indicated to update the reception beam with the second TRP (TRP #2) from TCI #7 to TCI #3.

The UE 920 may change the beam corresponding to the TCI state indicated for each of the first TRP (TRP #1) and the second TRP (TRP #2) so that the changed beam becomes the reception beam for each TRP based on the TCI update information. In this case, the reception beam change may be performed during the reception beam update time (i.e. *timeDurationForQCL)* reported by the UE 920 to the base station 910 as UE capability information. In FIG. 9, the reception beam update time (i.e. *timeDurationForQCL)* is illustrated as a time duration from T4 to T6.

As described above, the base station 910 may transmit PDSCHs to be transmitted in a cell-common manner. The base station 910 may transmit the PDSCHs to be transmitted in a cell-common manner via the first TRP (TRP #1) and the second TRP (TRP #2). The base station 910 may transmit a PDSCH 933 in a PDSCH occasion of the first TRP (TRP #1) and may transmit a PDSCH 934 in a PDSCH occasion of the second TRP (TRP #2).

As illustrated in FIG. 9, the PDSCH 933 transmitted by the first TRP (TRP #1) to the UE 920 may be located within the reception beam update time (i.e. *timeDurationForQCL).* In other words, the UE 920 may need to receive the PDSCH 933 transmitted by the first TRP (TRP #1) at a time T5 within the reception beam update time (i.e. *timeDurationForQCL).* In addition, as illustrated in FIG. 9, the PDSCH 934 transmitted by the second TRP (TRP #2) to the UE 920 may be located after the reception beam update time (i.e. *timeDurationForQCL).* In other words, the UE 920 may need to receive the PDSCH 934 transmitted by the second TRP (TRP #2) at a time T7 after the reception beam update time (i.e. *timeDurationForQCL).*

Since the reception beam update time *(timeDurationForQCL)* is a minimum time required for the UE 920 to perform beam change, the UE 920 may be unable to receive the PDSCH 933 received from the first TRP (TRP #1) within the reception beam update time (i.e. *timeDurationForQCL)* using the reception beam applied with the TCI state configured by the PDCCH 932. In addition, the UE 920 has a problem in that the UE 920 is not able to determine which reception beam needs to be applied to the PDSCH 934 transmitted by the second TRP (TRP #2), which carries data identical to the data transmitted through the PDSCH 933 of the first TRP (TRP #1).

In the present disclosure, in order to prevent the case illustrated in FIG. 9, default beam(s) are defined.

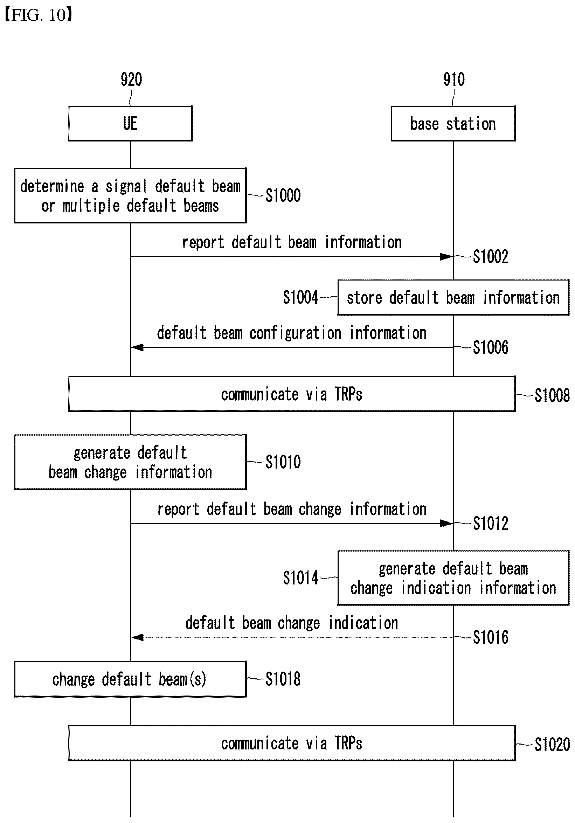

FIG. 10 is a sequence chart illustrating a default beam configuration and update procedure between a UE and a base station.

The UE 920 and the base station 910 illustrated in FIG. 10 are described using the same reference numerals as the UE and the base station described in FIG. 9. The UE 920 and the base station 910 may have the same configuration as described in FIG. 9.

In step S1000, the UE 920 may determine whether to use a single default beam or to use multiple default beams in an environment for communicating with multiple TRPs. The determination of whether the UE 920 uses a single default beam or multiple default beams may be made based on the capability of the UE 920. In the present disclosure, since an environment for communicating with mTRP is assumed, a case in which the UE 920 is able to configure multiple default beams is assumed and described. In addition, information on whether the UE 920 uses a single default beam or multiple default beams may be reported as UE capability information. The base station 910 may prevent a situation such as that of FIG. 9 based on the UE capability information

The default beam of the UE 920 may be a beam associated with a previous DL channel or UL channel. To further describe the associated beam, the default beam of the DL channel may be defined as a beam used when receiving a synchronization signal block (SSB) from a corresponding TRP or a beam used when receiving a channel state information-reference signal (CSI-RS) from a corresponding TRP. For example, the default beam of the DL channel for the first TRP may be defined as a beam used for receiving an SSB from the first TRP or a beam used for receiving a CSI-RS from the first TRP. In the same manner, the default beam of the DL channel for the second TRP may be defined as a beam used for receiving an SSB from the second TRP or a beam used for receiving a CSI-RS from the second TRP. In other words, in the mTRP environment, the DL default beam may be configured for each TRP. The UE 920 may determine to use multiple default beams when the UE capability allows multi-default beam configuration, and when multi-default beam configuration is not possible, the UE 920 may determine to use a single default beam.

In step S1002, the UE 920 may report default beam information to the base station 910. The default beam information may include information indicating whether the UE 920 is to use a single default beam or multiple default beams. As described above, the default beam information may be included in the UE capability information and transmitted to the base station 910. The base station 910 may receive the default beam information transmitted by the UE 920 in step S 1002.

In step S1004, the base station 910 may store the default beam information received from the UE 920.

In step S1006, the base station 910 may transmit default beam configuration information to the UE 920 based on the default beam information. The default beam configuration information may include information regarding case(s) of using the default beam when the UE 920 communicates with each of the TRPs. For example, the default beam configuration information may be information for configuring at least one of the PDSCH 933 and the PDSCH 934 to be received with the default beam(s) when the PDSCH 933 is received from the first TRP (TRP #1) during the reception beam update time duration (i.e. *timeDurationForQCL)* and the PDSCH 934 is received from the second TRP (TRP #2) after the reception beam update time duration (i.e. *timeDurationForQCL)* as illustrated in FIG. 9. For example, the default beam configuration information may be configured so that only the PDSCH 933 is received with the default beam. In another example, the default beam configuration information may be configured so that both the PDSCH 933 and the PDSCH 934 are received with the default beam(s).

The default beam configuration information may be transmitted to the UE 920 in various manner. For example, default beam configuration information may be included in an RRC signaling message, which is higher layer signaling, and transmitted to the UE 920. In another example, the default beam configuration information may be included in a MAC-CE and transmitted to the UE 920. In another example, the default beam configuration information may be included in a DCI and transmitted to the UE 920.

In step S1008, the base station 910 and the UE 920 may communicate via multiple TRPs. The communication between the base station 910 and the UE 920 may be communication based on TCI state information with each of the multiple TRPs. In another example, the communication may include a case of using the default beam(s) when receiving the PDSCHs 933 and 934 as illustrated in FIG. 9.

Based on the schemes described above, the base station 910 may configure the default beam configuration information to indicate that only the PDSCH 933 is to be received from the first TRP (TRP #1) at the time T5 in FIG. 9 with the default beam. In another example, the base station 910 may configure the default beam configuration information to indicate that both the PDSCH 933 (received at the time T5 in FIG. 9) and the PDSCH 934 (received from the second TRP (TRP #2) at the time T7) are to be received with the default beam(s). The UE 920 may receive the PDSCH 933 at the time T5 or both the PDSCH 933 at the time T5 and the PDSCH 934 at the time T7 with the default beam(s) based on the default beam configuration information.

Meanwhile, the default beam(s) between the UE 920 and the base station 910 may be changed. For example, when the UE 920 moves or when the channel state between the UE 920 and the TRP changes, the default beam may be changed. The base station 910 may need to receive information on the change of the default beam from the UE 920 for utilization of the default beam.

Hereinafter, with reference to FIG. 10, exemplary embodiments for default beam change according to exemplary embodiments of the present disclosure are described.

In step S1010, the UE 920 may generate change information for the default beam. The change information for the default beam may indicate at least one of the following: a change in a reception strength of a preconfigured reference signal, a change in a channel measurement result of a preconfigured channel, or a change in a reception quality of a preconfigured signal. In addition, the default beam change information may further include information on a reception strength of a reference signal using another reception beam, the channel measurement result of the preconfigured channel, or the reception quality of the preconfigured signal.

In step S1012, the UE 920 may report the change information for the default beam to the base station 910. The UE 920 may report the change information for the default beam to the base station 910 at a preconfigured period. As another example, the UE 920 may report the default beam change information to the base station 910 when a change of the default beam exceeding a preconfigured threshold is detected. The base station 910 may receive the default beam change information from the UE 920 in step S1012. The base station 910 may determine whether default beam switching is required based on the received default beam change information.

In step S1014, the base station 910 may generate default beam change indication information when default beam switching is required based on the received default beam change information. The default beam change indication information may include information regarding a beam to be used as the default beam. The default beam change indication information may be configured independently for each of the TRPs.

In step S1016, the base station 910 may transmit the default beam change indication information (or message) to the UE 920. The default beam change indication information may be transmitted using one of various forms of control information. For example, the base station 910 may transmit the default beam change indication information to the UE 920 using RRC signaling. As another example, the base station 910 may transmit the default beam change indication information to the UE 920 through a MAC-CE. As another example, the base station 910 may transmit the beam change indication information to the UE 920 using a DCI. In step S1016, the UE 920 may receive the default beam change indication information through one signaling scheme among the signaling schemes described above.

In step S1018, the UE 920 may change the default beam based on the default beam change indication information. The UE 920 may avoid using an invalid default beam by changing the default beam.

In step S1020, the UE 920 may communicate with the base station 910 via the TRPs after changing the default beam(s).

In the exemplary embodiment illustrated in FIG. 10, the UE 920 reports measurement information as the default beam change information to the base station 910, and the base station 910 indicates default beam switching based on the measurement information.

According to another exemplary embodiment of the present disclosure, the UE 920 may autonomously change the default beam. When autonomously changing the default beam, the UE 920 may autonomously change the default beam based on the received signal measurement information in step S1010. In this case, criteria for default beam change may use at least one of the criteria used by the base station 910 when changing the default beam as described above. When the UE 920 autonomously changes the default beam, the UE 920 may generate default beam change information for notifying the changed default beam and report (or transmit) the default beam change information to the base station 910. When the base station 910 receives the default beam change information from the UE 920, the base station 910 may store the default beam change information and provide a response to the UE 920 regarding the reception of the default beam change information. When the UE 920 receives the response from the base station 910 regarding the default beam change, the UE 920 may subsequently use the changed default beam with each of the TRPs connected to the base station 910. When the UE 920 autonomously changes the default beam, the UE 920 may individually change the default beam for each of the multiple TRPs.

Through the scheme described above, in a situation where a specific default beam is invalid due to a channel change or movement of the UE 920, it is possible to prevent attempting channel reception from TRPs using the default beams.

### (2) Second exemplary embodiment: case of considering repeated PDSCH transmission

According to the NR specifications, slot-based repeated PDSCH transmission has been introduced in a scenario where the UE is located at a cell edge to improve the reliability of data transmission. For example, the base station may indicate multiple repeated PDSCH transmissions using a parameter *pdsch-AggregationFactor* of higher layer signaling. In other words, the parameter *pdsch-AggregationFactor* may be a parameter indicating an aggregation level (i.e. the number of transmissions) of PDSCH repetitions carrying the same data.

The base station may transmit data transmitted to the UE in a multi-slot aggregation scheme through configuration of *pdsch-AggregationFactor.* The multi-slot aggregation scheme is a scheme of preconfiguring multiple repeated PDSCH transmissions, and depending on the aggregation level, a minimum of two PDSCH repetitions and a maximum of eight PDSCH repetitions may be indicated. The UE may acquire the parameter *pdsch-AggregationFactor* through higher layer signaling and may receive the PDSCH based on the repetition number configured in *pdsch-AggregationFactor.*

A single scheduled PDSCH occasion may partially overlap with a reception beam update time (i.e. *timeDurationForQCL).* For example, the PDSCH occasion may exist both before and after an end time of *timeDurationForQCL.* Such a situation is described with reference to the accompanying drawing.

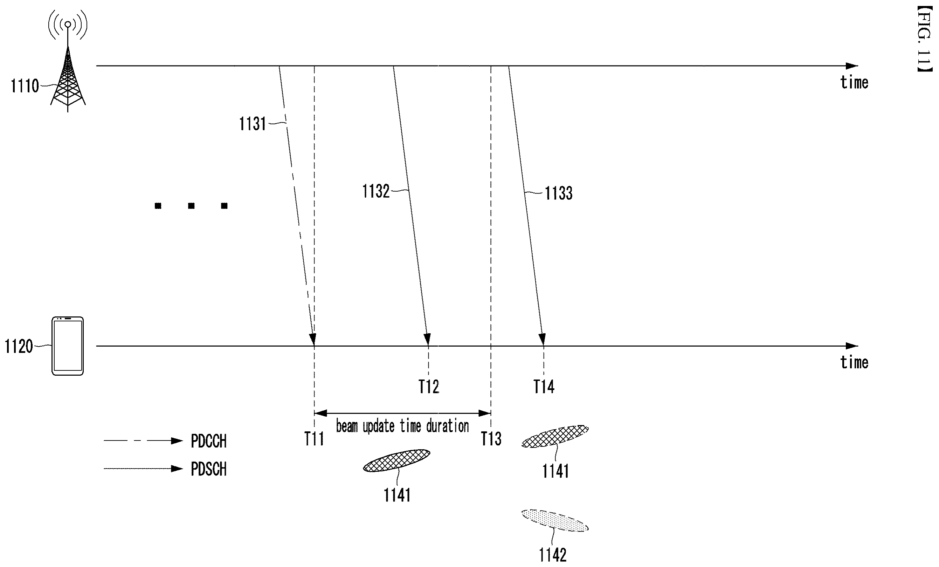

FIG. 11 is a conceptual diagram illustrating a case in which a repeatedly configured PDSCH occasion partially overlaps a reception beam update time.

FIG. 11 illustrates a first TRP 1110 and a UE 1120. The first TRP 1110 may include all or part of the components of the communication node 200 described in FIG. 2. The first TRP 1110 may further include additional components in addition to the components of the communication node 200 illustrated in FIG. 2. For example, the first TRP 1110 may further include an interface for configuring a backhaul link with a base station not illustrated in FIG. 2.

The UE 1120 may include all or part of the components of the communication node 200 described in FIG. 2. The UE 1120 may further include additional devices for user convenience in addition to the components of the communication node 200 illustrated in FIG. 2. For example, the UE 1120 may further include various sensor devices for detecting user movement.

In FIG. 11, the horizontal axis may represent time. The first TRP 1110 may transmit a PDCCH 1131 in downlink. The PDCCH 1131 may include control information for a PDSCH transmitted in PDSCH occasions configured with repeated transmission as described above. **In** other words, the control information for repeated PDSCH transmission in the PDSCH occasions may be transmitted by the one PDCCH 1131. The repetition number of the PDSCH may be configured to be a minimum of two times and a maximum of eight times by higher layer signaling as described above. In FIG. 11, a case in which the PDSCH is repeatedly transmitted two times is illustrated. The PDCCH 1131 may further include TCI state change information.

The UE 1120 may receive the PDCCH 1131 at a time T11 and may acquire control information for repeatedly transmitted PDSCHs 1132 and 1133 from the received PDCCH 1131. The UE 1120 may also acquire beam indication information from the received PDCCH 1131. The beam indication information may include a TCI field, or may include a TCI field and a TCI selection field as described above.

When the PDCCH 1131 includes beam indication information, the UE 1120 may adjust a reception beam based on the beam indication information during a beam update duration (i.e. *timeDurationForQCL).* In FIG. 11, the reception beam update time duration (i.e. *timeDurationForQCL)* is illustrated as from the time T11, when the PDCCH 1131 is received, to a time T13.

The first TRP 1110 may transmit the first PDSCH 1132 to the UE 1120 based on the control information included in the PDCCH 1131 and the repetition number configured by higher layer signaling, and may subsequently transmit the second PDSCH 1133 to the UE 1120. The data transmitted to the UE 1120 through the first PDSCH 1132 may be the same as that of the second PDSCH 1133.

The UE 1120 may receive the first PDSCH 1132 transmitted by the first TRP 1110 at a time T12, and may receive the second PDSCH 1133 transmitted by the first TRP 1110 at a time T14. The time T12 may be within the beam update time duration from the perspective of the UE 1120, and the time T14 may be a time after the beam update. In other words, the UE 1120 receives the first PDSCH 1132 at the time T12 before the end of the time configured by *timeDurationForQCL,* and the second PDSCH 1133 may be received at a time after the end of the time configured by *timeDurationForQCL.*

In general, when the UE 1120 receives the PDSCHs 1132 and 1133 within PDSCH occasions configured by one PDCCH 1131, the UE 1120 expects to receive the PDSCHs without changing the reception beam. In other words, the 3GPP specifications do not define a case where reception beam change occurs while the UE 1120 receives the PDSCHs 1132 and 1133 repeatedly transmitted by one PDCCH 1131. Therefore, when the UE 1120 receives the PDSCHs 1132 and 1133 repeatedly transmitted by one PDCCH 1131, a definition of a reception beam for receiving the PDSCH 1132 received within the beam update time duration is required.

Assuming that the UE 1120 receives the first PDSCH 1132 at the time T12 within a duration between T11 and T13, which is the reception beam update time duration, with a default beam 1141, an ambiguity problem may occur regarding whether the UE 1120 is to receive the second PDSCH 1133 at the time T14 using the default beam 1141 or using a changed reception beam 1142 indicated by the PDCCH 1131. This is because the UE 1120 expects to receive the PDSCHs 1132 and 1133 carrying the same data without additional change of the beam.

The present disclosure provides methods for the UE to determine a reception beam when PDSCHs are consecutively received in the reception beam update time and after the reception beam update time. The reception beam determination methods of the UE according to the present disclosure are with reference to the accompanying drawing.

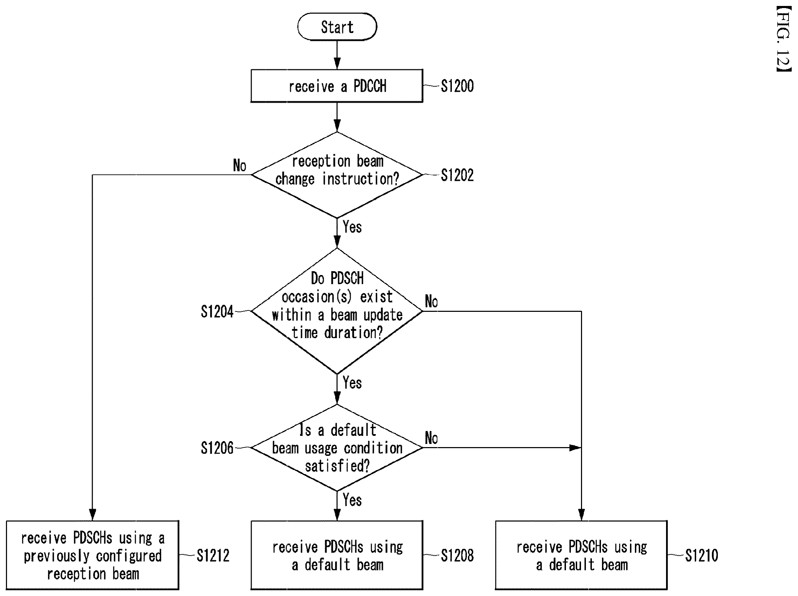

FIG. 12 is a flowchart for reception beam determination when PDSCHs are consecutively received within a reception beam update time and after the reception beam update time.

The flowchart of FIG. 12 may describe an operation of the UE, and the base station and/or TRP(s) may perform an operation corresponding to the operation of the UE. For example, when the UE receives a PDCCH, PDSCH, and/or higher layer signaling, the base station and/or TRP(s) may transmit the PDCCH, PDSCH, and/or higher layer signaling to the UE. In addition, the UE, the base station, and/or the TRPs may have the same or similar configurations as described in FIGS. 9 to 11.

In step S1200, the UE may receive a PDCCH. The PDCCH may include control information for PDSCHs carrying the same data in PDSCH occasions and may include beam indication information. The beam indication information may include a TCI field or may include a TCI field and a TCI selection field as described above. The repeated PDSCH transmission may include a minimum of two repetitions to a maximum of eight repetitions as described above. The minimum repeated transmission may mean that the base station or the TRP transmits the PDSCH two times and the two PDSCH repetitions carry identical data. The maximum repeated transmission may mean that the base station or the TRP transmits the PDSCH eight times and the eight PDSCH repetitions carry identical data. The identical data may mean an identical transport block (TB). PDSCH occasions for repeated PDSCH transmission may exist consecutively in units of slots, and repeated PDSCH transmission may be understood as an aggregation level in units of slots.

In step S1202, the UE may determine whether change of a reception beam is indicated based on the beam indication information included in the received PDCCH. The reception beam change may mean that a TCI state configured for a TRP is changed as described above. When a result of checking in step S1202 indicates that the beam indication information does not indicate reception beam change, the UE may perform step S1212. When the result of step S1202 indicates that the beam indication information indicates reception beam change, the UE may perform step S1204.

In step S1212, the UE may receive multiple PDSCH repetitions using the previously configured reception beam. In other words, in step S1212, the UE may receive two or more PDSCH repetitions carrying identical data using the previously configured reception beam with the TRP.

In step S1204, since reception beam change is indicated, the UE may determine whether PDSCH occasion(s) exist within the reception beam update time (e.g. *timeDurationForQCL).* When PDSCH occasion(s) exist within the reception beam update time configured as *timeDurationForQCL,* the UE may perform step S1206. On the other hand, when no PDSCH occasion exists within *timeDurationForQCL,* the UE may perform step S1210.

In step S1210, since no PDSCH occasion exists within the reception beam update time, the UE may receive PDSCH repetitions transmitted in two or more PDSCH occasions after changing the reception beam based on the beam change information.

When the check result of step S1204 indicates that PDSCH occasion(s) exist within *timeDurationForQCL,* the UE may determine in step S1206 whether a default beam usage condition is satisfied. The default beam usage condition may include at least one of the following conditions. The conditions described below may be used individually or may be used in combination.

Condition 1: when the number of PDSCH repetitions received after *timeDurationForQCL* among the PDSCH repetitions carrying identical data is less than or equal to the number of PDSCH repetitions received within *timeDurationForQCL.*

Condition 2: when the value of the reception beam update time (i.e. *timeDurationForQCL)* is greater than or equal to a time interval between PDSCH occasions.

When the condition 1 is satisfied, in step S1208, the UE may receive both the first PDSCH and the second PDSCH using the default beam. A case where the condition 1 is satisfied may include the case illustrated in FIG. 11, where the first PDSCH 1132 is received within *timeDurationForQCL,* and the second PDSCH 1133 is received after *timeDurationForQCL* ends. Therefore, when the condition 1 is satisfied, in order to prevent an increase of overhead due to beam change, the second PDSCH 1133 may also be received using the default beam configured according to the default beam configuration rule for receiving the first PDSCH 1132.

When the condition 1 is not satisfied, the UE may perform step S1210. In step S1210, the UE may receive PDSCH repetitions in PDSCH occasions using the changed reception beam based on the beam indication information.

As an example of a case in which the condition 1 is not satisfied, it is assumed that the repetition number of the PDSCH is four. In addition, as illustrated in FIG. 11, it is assumed that the first PDSCH repetition is received within the reception beam update time (i.e. *timeDurationForQCL*), and the second to fourth PDSCH repetitions are received after the reception beam update time (i.e. *timeDurationForQCL*). According to the above assumption, it can be seen that the aggregation level of the PDSCH repetitions received after *timeDurationForQCL* is higher than that of the PDSCH repetitions received within *timeDurationForQCL,* with respect to the same TB. When the PDSCH repetitions after *timeDurationForQCL* for the same TB are not received using the changed reception beam, it may be inefficient in terms of performance. Therefore, in the present disclosure, when the number of PDSCH repetitions received after *timeDurationForQCL* is greater than the number of PDSCH repetitions received within *timeDurationForQCL,* the UE may determine that the condition 1 is not satisfied. When the condition 1 is not satisfied, the UE may receive the PDSCH repetitions in the PDSCH occasions in which the changed reception beam can be received. In other words, the UE may receive or may not receive the PDSCH repetitions within *timeDurationForQCL* using the default beam, and may receive the PDSCH repetitions after *timeDurationForQCL* using the changed reception beam.

The condition 2 corresponds to a case where, when the reception beam update time (i.e. *timeDurationForQCL*) is equal to or longer than a time interval between PDSCH occasions, the UE is not able to secure sufficient time to perform a reception beam change for receiving the PDSCH. When the condition 2 is satisfied, the UE may determine that the default beam usage condition is satisfied because the UE is not able to secure a time for performing a reception beam change for receiving the PDSCH. On the other hand, when the reception beam update time is shorter than the time interval between the PDSCH occasions, in other words, when the UE is able to secure sufficient time to perform a reception beam change for receiving the PDSCH, the UE may receive the PDSCH using a changed reception beam.

The UE may perform an operation of step S1208 when the condition 2 is satisfied, and may perform an operation step S1210 when the condition 2 is not satisfied.

When the condition 2 is satisfied, in step S1208, the UE may receive all the PDSCH repetitions using the default beam.

When the condition 2 is not satisfied, in step S1210, the UE may receive the PDSCH repetition(s) within *timeDurationForQCL* using the default beam, and may receive the PDSCH repetition(s) after *timeDurationForQCL* using a reception beam updated based on the beam change information. In another example, in step S1210, the UE may ignore the PDSCH repetition(s) within *timeDurationForQCL,* and may receive the PDSCH repetition(s) after *timeDurationForQCL* using the reception beam updated based on the beam change information. In this case, the updated reception beam may be a beam indicated by the TCI selection field. For example, when a TCI state list (i.e. common scheduled UE information) indicated by 3 bits indicates (DLorjoint state for TRP#1, DLorjoint state for TRP#2), one of 'DLorjoint state for TRP#1' or 'DLorjoint state for TRP#2' may be indicated according to a value of the 2-bit TCI selection field. In another example, when a TCI state list (i.e. common scheduled UE information) indicated by 3 bits indicates [(DL state for TRP#1, UL state for TRP#1), (DL state for TRP#2, UL state for TRP#2)], one of '(DL state for TRP#1, UL state for TRP#1)' or '(DL state for TRP#2, UL state for TRP#2)' may be indicated according to the value of the 2-bit TCI selection field.

According to the one exemplary embodiment described above, for a plurality of PDSCH repetitions carrying the same data, the plurality of PDSCH repetitions carrying the same data may be received using a reception beam of a previous PDSCH, or the remaining PDSCH repetitions among the plurality of PDSCHs carrying the same data may be received using a reception beam that has received the first PDSCH repetition.

The reception beam configuration method for PDSCH reception of FIG. 12 described above may be a method capable of using at least one of the condition 1 or condition 2.

In another example, by using specific signaling, the base station may preconfigure a reception beam usage method for the UE. In other words, when beam indication information indicates a reception beam change and a PDSCH occasion exists within a beam update time duration, the base station may pre-indicate to the UE a reception beam to be used. The reception beam for receiving PDSCH repetitions may be one of a reception beam used for PDSCH reception in a previous PDSCH occasion or a beam selected by a TCI selection field. Configuration information for pre-indicating the reception beam to be used may be transmitted to the UE through one or two or more of RRC signaling, MAC-CE, or DCI.

When configuration information for pre-indicating a reception beam is provided through DCI, 1 bit may be used, and the configuration information for pre-indicating a reception beam may indicate whether beam change for PDSCH reception is allowed or not.

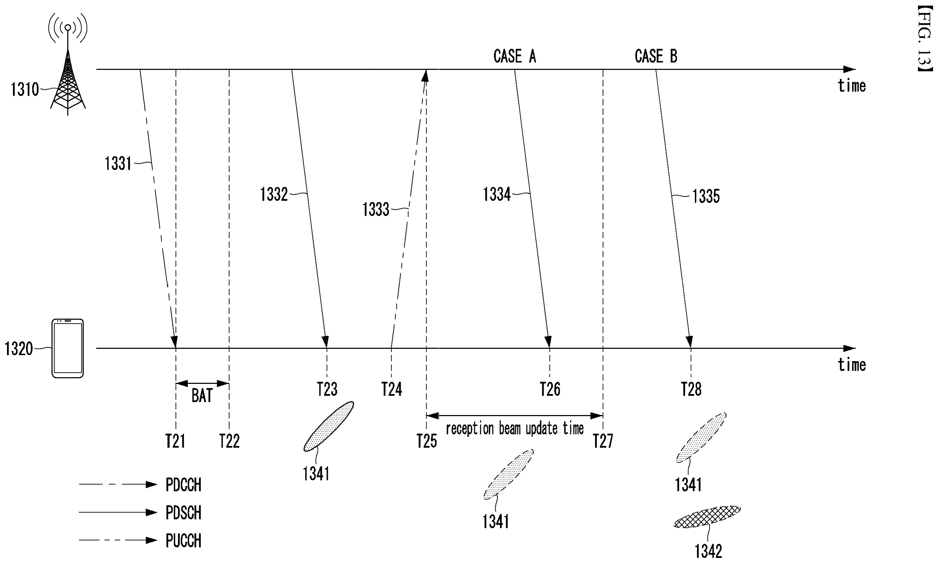

FIG. 13 is a conceptual diagram illustrating a case where, when a PDSCH is configured for repeated transmission, the PDSCH is received inside/outside a BAT duration.

FIG. 13 illustrates a first TRP 1310 and a UE 1320. The first TRP 1310 may include all or some of the components of the communication node 200 described in FIG. 2. The first TRP 1310 may further include additional components in addition to the components of the communication node 200 illustrated in FIG. 2. For example, the first TRP 1310 may further include an interface for establishing a backhaul link with a base station not illustrated in FIG. 2.

The UE 1320 may include all or some of the components of the communication node 200 described in FIG. 2. The UE 1320 may further include additional devices for user convenience in addition to the components of the communication node 200 illustrated in FIG. 2. For example, the UE 1320 may further include various sensor devices for detecting movement of a user.

In FIG. 13, the horizontal axis may indicate time. The first TRP 1310 may transmit a PDCCH 1331 in downlink. The UE 1320 may receive the PDCCH 1331 at a time T21. The PDCCH 1331 may include beam indication information as described above. The beam indication information may include a 3-bit TCI field and a 2-bit TCI selection field. The PDCCH 1331 may, for example, indicate {TCI state #1, TCI state #3} in a TCI state list in the TCI field, and the TCI selection field value may be set to '01'. As described above, when the TCI selection field value is set to '01', TCI state #3 may be indicated.

The UE 1320 may change a reception beam during a reception beam update time (i.e. *timeDurationForQCL*) from the time T21 to a time T22 based on the reception beam change indication information.

Since the UE 1320 has changed the reception beam to TCI state #3 at the time T22, the UE 1320 may receive a PDSCH 1332 at a time T23 using a reception beam 1341 based on TCI state #3. After demodulating and decoding the PDSCH 1332, the UE 1320 may transmit a PUCCH 1333 including a HARQ response signal to the first TRP 1310 at a time T24.

The UE 1320, based on the PDCCH 1331 received from the first TRP 1310, may change a beam during a BAT duration such as from T25 to T27 after transmitting the PUCCH 1333 at the time T24. The PDCCH 1331 received at the time T21 may include beam indication information and control information for repeatedly transmitted PDSCHs, for example, information for demodulation and decoding and PUCCH resource allocation information. The first TRP 1310 may be configured through RRC and/or DCI to repeatedly transmit the same data to the UE 1320 through two or more PDSCH repetitions. The first TRP 1310, after transmitting the first PDSCH repetition 1332 to the UE 1320, may transmit a PDSCH repetition 1334 and/or a PDSCH repetition 1335 to the UE 1320. This is described based on two cases (CASE A and CASE B).

CASE A: The first TRP 1310 may transmit the PDSCH repetition 1334 to the UE 1320 in a PDSCH occasion configured within the BAT duration, after transmitting the first PDSCH repetition 1332 to the UE 1320.

CASE B: The first TRP 1310 may transmit the PDSCH repetition 1335 to the UE 1320 in a PDSCH occasion at a time after the BAT duration ends, after transmitting the first PDSCH repetition 1332 to the UE 1320.

In a case of receiving the PDSCH repetition 1334 in the PDSCH occasion within the BAT duration as in CASE A, one of the following two methods may be used.

First, the UE 1320 may receive both the PDSCH repetition 1332 of the first PDSCH occasion and the PDSCH repetition 1334 of the second PDSCH occasion using the reception beam 1341 based on the TCI selection field among TCI states indicated by the PDCCH 1331. In other words, the UE 1320 may receive the PDSCH repetition 1334 using the reception beam 1341 based on the same TCI state as the PDSCH 1332.

Second, the UE 1320 may use the reception beam 1341 based on the TCI selection field among the TCI states indicated by the PDCCH 1331 for the PDSCH repetition 1332 of the first PDSCH occasion, and may receive the PDSCH repetition 1334 received before expiration of the BAT duration using the default beam (not illustrated in FIG. 13). As described above, the default beam may be a beam that has received the PDCCH 1331.

When both the first method and the second method as described above are allowed, the base station may need to notify the UE 1320 of a method of selecting a reception beam for the PDSCH repetition1332 and the PDSCH repetition 1334 in advance. The base station may notify the UE 1320 of the method of selecting the reception beam through various signaling. For example, the base station may notify the UE 1320 of the method of selecting the reception beam using one or two or more of RRC signaling, MAC-CE, or DCI.

CASE B may correspond to a case where the PDSCH repetition1335 is to be received using a reception beam different from the reception beam that has received the first PDSCH repetition 1332. In other words, it may correspond to a case where the UE 1320 has received the first PDSCH repetition 1332 using the reception beam 1341 as described in CASE A, and a new reception beam 1342 has been configured by the beam update time duration (i.e. T25-T27). The UE 1320 is not regulated as to which beam, among the previous reception beam 1341 and the new reception beam 1342, needs to be used for reception of the PDSCH repetition 1335.

As described above, according to the current 3GPP specifications for beam selection criteria, after the BAT duration following a PUCCH or PUSCH transmission for an ACK, the beam indication takes precedence over the TCI selection rule. Therefore, in the situation of CASE B, it is necessary to configure a rule for the UE 1320 to determine a reception beam.

The method according to the present disclosure proposes a rule in which, in the situation of CASE B, the UE 1320 changes the beam according to the beam indication. In the present disclosure, the proposed rule may cause all DL/UL channels applied after the BAT to follow the beam indication field (e.g. TCI field) delivered through the DCI. In the situation of CASE B, when the UE 1320 changes the beam according to the beam indication, the TCI selection field specifically applied to the PDSCH may be configured to no longer be valid. Through this, the rule proposed in the present disclosure may be made to conform to the existing 3GPP specifications. If the PDSCH repetition 1335 is received based on the TCI selection field, an additional beam change in another DL/UL channel may be required. According to the rule of the present disclosure, since an additional beam change in another DL/UL channel may be prevented, overhead may be reduced.

In another example, for the situation of CASE B, the base station may transmit control information to the UE 1320 to configure the reception beam to be determined according to either the TCI indication field or the TCI selection field. In this case, the control information may be transmitted through at least one of RRC signaling, MAC-CE, or DCI. When control information for determining the reception beam is delivered to the UE 1320 through DCI, an additional 1-bit field may be used. The additional 1 bit transmitted in the DCI may be understood as information indicating whether or not a beam change for receiving the PDSCH among multiple PDSCH occasions is allowed.

In another method, the UE 1320 may be pre-programmed to follow one of the TCI field or the TCI selection field.

As described above, the UE 1320 may report UE capability information to the base station. In the present disclosure, the UE 1320 may report to the base station UE capability information further including information on whether the UE 1320 is capable of supporting a beam change within consecutive PDSCH occasions. When the UE reports whether it supports beam change within consecutive PDSCH occasions through the UE capability information, the base station may attempt PDSCH transmissions by changing a transmission beam based on the received UE capability information.

At least one of the methods described in the present disclosure may also be applied to a PDCCH including PUSCH scheduling information. In other words, the UE may apply a bit field of a DCI format related to PUSCH scheduling to configuration of a transmission beam (e.g. spatial filter) of the UE's PUSCH. In this case, the DCI described above may be changed to and interpreted as uplink control information (UCI).

At least one of the methods described in the present disclosure may be applied to all DL/UL channels associated with TCI state(s) indicated (or configured) through the PDCCH. At least one of the methods described in the present disclosure may be indicated (or configured) by additionally using a separate field in the DCI. In another example, the method according to the present disclosure may be implemented by partially changing or adding information of a MAC-CE or RRC signaling. At least one of the methods described in the present disclosure may be extended and applied to N TRPs or N panels. Here, N may be a natural number. At least one of the methods described in the present disclosure may also be used in the case of multi-DCI-based TCI state updates.

Meanwhile, in the present disclosure, the first exemplary embodiment and the second exemplary embodiment have been described separately. However, at least some or all of the first exemplary embodiment may be used together with the second exemplary embodiment. Also, at least some of the second exemplary embodiment may be used together with the first exemplary embodiment.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:
receiving repeated transmission information of same data through higher layer signaling;
receiving first downlink control information (DCI) from a first transmission and reception point (TRP);
configuring a first reception beam for receiving physical downlink shared channels (PDSCHs) for a preconfigured first time, based on beam indication information included in the first DCI, the beam indication information indicating a change in reception beam;
determining whether a default beam usage condition is satisfied, based on at least one PDSCH occasion associated with the repeated transmission information and existing within the first time; and
based on a determination that the default beam usage condition is satisfied, receiving PDSCHs from the first TRP using a default beam in the at least one PDSCH occasion associated with the repeated transmission information.

2. The method of claim 1, wherein the beam indication information includes a transmission configuration indication (TCI) field and a TCI selection field, the TCI field indicates one TCI state list among configured TCI state lists, and the TCI selection field includes information indicating one of TCI states in the one TCI state list.

3. The method of claim 1, wherein the default beam usage condition is satisfied when, among PDSCH occasions carrying same data based on the repeated transmission information, a number of PDSCH occasions received after the first time is less than or equal to a number of PDSCH occasions received within the first time.

4. The method of claim 1, wherein the default beam usage condition is satisfied when the first time is equal to or greater than a time interval between PDSCH occasions.

5. The method of claim 1, further comprising: receiving a PDSCH using the configured first reception beam in a PDSCH occasion based on the repeated transmission information after the first time, when the default beam usage condition is not satisfied.

6. The method of claim 1, further comprising:
receiving second DCI from the first TRP, the second DCI including beam indication information, uplink resource allocation information, and control information for repeatedly transmitted PDSCHs;
receiving a first PDSCH in a first PDSCH occasion based on the repeated transmission information and the second DCI;
transmitting feedback information to the first TRP through a physical uplink control channel (PUCCH) according to the uplink resource allocation information, the feedback information including a response to the PDSCHs based on the first DCI;
configuring a second reception beam during a beam application time previously received from the first TRP, the second reception beam being configured for receiving the PDSCHs indicated by the second DCI and based on the beam indication information included in the second DCI, the beam indication information indicating a change in reception beam; and
receiving a second PDSCH in a second PDSCH occasion using a same reception beam as the first PDSCH, the second PDSCH occasion carrying the same data and existing within the beam application time, based on the repeated transmission information and the second DCI.

7. The method of claim 1, further comprising:
receiving a second DCI from the first TRP, the second DCI including beam indication information, uplink resource allocation information, and control information for repeatedly transmitted PDSCHs;
receiving a first PDSCH in a first PDSCH occasion configured for repeated transmission;
transmitting feedback information to the first TRP through a PUCCH according to the uplink resource allocation information, the feedback information including a response to the PDSCHs;
configuring a second reception beam during a beam application time previously received from the first TRP, the second reception beam being configured for receiving the PDSCHs indicated by the second DCI and based on the beam indication information included in the second DCI, the beam indication information indicating a change in reception beam; and
receiving a second PDSCH in a second PDSCH occasion using the second reception beam, the second PDSCH occasion carrying the same data and existing after configuration of the second reception beam, based on the repeated transmission information and the second DCI.

8. A user equipment (UE) comprising at least one processor, wherein the at least one processor causes the UE to perform:
receiving repeated transmission information of same data through higher layer signaling;
receiving first downlink control information (DCI) from a first transmission and reception point (TRP);
configuring a first reception beam for receiving physical downlink shared channels (PDSCHs) for a preconfigured first time, based on beam indication information included in the first DCI, the beam indication information indicating a change in reception beam;
determining whether a default beam usage condition is satisfied, based on at least one PDSCH occasion associated with the repeated transmission information and existing within the first time; and
based on a determination that the default beam usage condition is satisfied, receiving PDSCHs from the first TRP using a default beam in the at least one PDSCH occasion associated with the repeated transmission information.

9. The UE of claim 8, wherein the beam indication information includes a transmission configuration indication (TCI) field and a TCI selection field, the TCI field indicates one TCI state list among configured TCI state lists, and the TCI selection field includes information indicating one of TCI states in the one TCI state list.

10. The UE of claim 8, wherein the default beam usage condition is satisfied when, among PDSCH occasions carrying same data based on the repeated transmission information, a number of PDSCH occasions received after the first time is less than or equal to a number of PDSCH occasions received within the first time.

11. The UE of claim 8, wherein the default beam usage condition is satisfied when the first time is equal to or greater than a time interval between PDSCH occasions.

12. The UE of claim 8, wherein the at least one processor further causes the UE to perform: receiving a PDSCH using the configured first reception beam in a PDSCH occasion based on the repeated transmission information after the first time, provided that the default beam usage condition is not satisfied.

13. The UE of claim 8, wherein the at least one processor further causes the UE to perform:
receiving second DCI from the first TRP, the second DCI including beam indication information, uplink resource allocation information, and control information for repeatedly transmitted PDSCHs;
receiving a first PDSCH in a first PDSCH occasion based on the repeated transmission information and the second DCI;
transmitting feedback information to the first TRP through a physical uplink control channel (PUCCH) according to the uplink resource allocation information, the feedback information including a response to the PDSCHs based on the first DCI;
configuring a second reception beam during a beam application time previously received from the first TRP, the second reception beam being configured for receiving the PDSCHs indicated by the second DCI and based on the beam indication information included in the second DCI, the beam indication information indicating a change in reception beam; and
receiving a second PDSCH in a second PDSCH occasion using a same reception beam as the first PDSCH, the second PDSCH occasion carrying the same data and existing within the beam application time, based on the repeated transmission information and the second DCI.

14. The UE of claim 8, wherein the at least one processor further causes the UE to perform:
receiving a second DCI from the first TRP, the second DCI including beam indication information, uplink resource allocation information, and control information for repeatedly transmitted PDSCHs;
receiving a first PDSCH in a first PDSCH occasion configured for repeated transmission;
transmitting feedback information to the first TRP through a PUCCH according to the uplink resource allocation information, the feedback information including a response to the PDSCHs;
configuring a second reception beam during a beam application time previously received from the first TRP, the second reception beam being configured for receiving the PDSCHs indicated by the second DCI and based on the beam indication information included in the second DCI, the beam indication information indicating a change in reception beam; and
receiving a second PDSCH in a second PDSCH occasion using the second reception beam, the second PDSCH occasion carrying the same data and existing after configuration of the second reception beam, based on the repeated transmission information and the second DCI.

15. A method of a base station, comprising:
transmitting repeated transmission information of same data to a user equipment (UE) through higher layer signaling;
transmitting first downlink control information (DCI) to the UE via a first transmission and reception point (TRP) connected to the base station through a backhaul, the first DCI including beam indication information indicating a change in a reception beam of the UE; and
transmitting data to the UE through a physical downlink shared channel (PDSCH) occasion based on the repeated transmission information and the first DCI,
wherein at least one PDSCH occasion is based on the repeated transmission information and exists within a first time for changing the reception beam of the UE, a PDSCH transmitted in the at least one PDSCH occasion being expected to be received by the UE using a default beam preconfigured in advance, provided that a default beam usage condition is satisfied.

16. The method of claim 15, wherein the beam indication information includes a transmission configuration indication (TCI) field and a TCI selection field, the TCI field indicates one TCI state list among configured TCI state lists, and the TCI selection field includes information indicating one of TCI states in the one TCI state list.

17. The method of claim 15, wherein the default beam usage condition is satisfied when, among PDSCH occasions carrying same data based on the repeated transmission information, a number of PDSCH occasions received after the first time is less than or equal to a number of PDSCH occasions received within the first time.

18. The method of claim 15, wherein the default beam usage condition is satisfied when the first time is equal to or greater than a time interval between PDSCH occasions.

19. The method of claim 15, further comprising:
receiving a default beam information report message based on capability information of the UE from the UE before transmitting the repeated transmission information to the UE; and
transmitting default beam configuration information to the UE based on the default beam information report message.

20. The method of claim 15, wherein the default beam information report message is received either at a preconfigured period or when a change greater than a preconfigured threshold is detected in the UE.
